# EUROPÄISCHE PATENTSCHRIFT

(11) **EP 3 953 952 B1**
(45) Veröffentlichungstag und Bekanntmachung des Hinweises auf die Patenterteilung: **17.01.2024**
(21) Anmeldenummer: 19717806.4
(22) Anmeldetag: 09.04.2019
(51) Int. Cl.: H01B 13/012, H01B 13/08, B65H 81/08, B29C 63/10

(54) **VORRICHTUNG ZUM UMWICKELN EINES ELEKTRISCHEN LEITUNGSSATZES**
DEVICE FOR WRAPPING AN ELECTRICAL WIRE HARNESS
DISPOSITIF D'ENROULEMENT D'UN FAISCEAU DE CÂBLES ÉLECTRIQUES

(43) Veröffentlichungstag der Anmeldung: 16.02.2022
(73) Patentinhaber: Lisa Dräxlmaier GmbH, 84137 Vilsbiburg (DE)
(72) Erfinder: LUDWIG, Sebastian, 84034 Landshut (DE); KIERMEIER, Karl-Heinz, 84178 Kröning (DE); KALLEÉ, Klaus, 84137 Vilsbiburg (DE)
(86) Internationale Anmeldenummer: PCT/EP2019/058895
(87) Internationale Veröffentlichungsnummer: WO 2020/207559

(56) Entgegenhaltungen:
- US-A- 1 450 584
- US-A- 3 887 761
- US-A1- 2011 011 539
- US-A1- 2012 048 454
- US-A1- 2014 352 867

## Beschreibung

Die Erfindung betrifft eine Vorrichtung zum Umwickeln eines elektrischen Leitungssatzes mit einem Schutzband und ein Verfahren.

Ein Leitungssatz kann eine Mehrzahl von Leitungen, insbesondere elektrischer Leitungen umfassen, beispielsweise kann ein Leitungssatz ein Kabelbaum für ein Kraftfahrzeug sein.

Leitungssätze können gegen mechanische Belastungen, wie Stöße oder Schnitte, anfällig sein. Zum Schutz des Leitungssatzes, insbesondere vor solchen mechanischen Belastungen, kann der Leitungssatz mit einem Schutzband umwickelt werden.

Zum Anbringen eines Schutzbandes kann ein Wickelautomat verwendet werden, der das Schutzband um den Leitungssatz herum rotieren lässt. Hierbei kann das Schutzband von dem Wickelautomaten auf den Leitungssatz aufgewickelt werden.

Jedoch kann eine Vorratslänge des Schutzbandes hierbei stark begrenzt sein, es kann zu Materialverschwendung kommen. Die Rüstzeit kann groß sein, insbesondere kann sich die Zeit summieren, die ein häufiges Wechseln einer Schutzbandrolle bei einem herkömmlichen Wickelautomaten benötigt.

Die US 1 450 584 A offenbart eine Vorrichtung zur Verarbeitung von Leitungen. Die US 2012/048 454 A1 offenbart eine Vorrichtung zum Umwickeln eines Leiterstabs mit einer Isolierung. Die US 3 887 761 A offenbart eine Vorrichtung und ein Verfahren zum Steuern der Zuführgeschwindigkeit eines Films, der spiralförmig um einen elektrischen Leiter gewickelt wird.

Es ist eine Aufgabe der Erfindung, ein vorteilhaftes Konzept zum Umwickeln eines elektrischen Leitungssatzes aufzuzeigen.

Ein Gedanke der Erfindung ist es, eine Rotation des Leitungssatzes anstatt einer Rotation des Schutzbandes um den Leitungssatz herum durchzuführen. Hierbei kann insbesondere ein Leitungssatz mit einem Schutzband mit beidseitigen Klebestreifen umwickelt werden. Hierdurch kann ein, insbesondere beidseitiges, Abziehen einer Klebeschutzfolie, die einen Klebestreifen schützt, vereinfacht werden. Somit wird ein automatisiertes Umwickeln des Leitungssatzes mit einem Schutzband ermöglicht.

Gemäß einem ersten Aspekt der Erfindung wird die Aufgabe durch eine Vorrichtung zum Umwickeln eines elektrischen Leitungssatzes mit einem Schutzband nach Anspruch 1 gelöst.

Das Schutzband ist ein Klebeband, insbesondere ein Klebeband mit Klebeflächen auf zwei unterschiedlichen und gegenüberliegenden Seiten. Das Schutzband kann ein Hochvolt-Schutzband sein, das gegen mechanische Belastungen, wie Stöße, schützt, ein sogenanntes HV-Crashschutz Band (Crash-PAD). Das Schutzband kann ein Aramidgeflecht aufweisen, aber auch aus einem anderen Material sein.

Der Leitungssatz kann ein Leitungsbündel aber auch eine einzelne Leitung sein. Der Leitungssatz kann insbesondere einen großen Querschnitt aufweisen oder dicke Leitungen oder Leitungsbündel umfassen. Hierdurch kann der Leitungssatz eine gewisse Steifigkeit aufweisen, die vorteilhaft sein kann.

Die Vorrichtung erlaubt vorteilhaft ein prozessüberwachtes Aufbringen des Schutzbandes, wobei eine Vorratslänge des Schutzbandes nicht begrenzt ist, bei gleichzeitig weniger Verschnitt bzw. Verschwendung von hochpreisigem Schutzband und geringen Rüstzeiten. Das Schützen von Mehrfachleitungen, insbesondere von 2-phasigen oder 3-phasigen Mehrfachleitungen ist möglich.

Die Vorrichtung kann den Leitungssatz, insbesondere Hochvolt-Leitungssatz, drehen, um das Schutzband, insbesondere ein offenes bandförmiges Crash-Schutzprodukt automatisch aufzubringen.

Mit der Vorrichtung können Schutzbänder verarbeitet werden, die eine größere Dicke und/oder Breite haben, als mit bekannten Bandagiermaschinen zu verarbeitende Schutzbänder. Des Weiteren können große Rollen des Schutzbandes bevorratet werden, die beispielsweise durch besonders dicke Schutzbänder notwendig sein können, um eine wirtschaftlich sinnvolle Menge vorzuhalten. Bei der beschriebenen Vorrichtung ist die Größe der Rolle des Schutzbandes nicht begrenzt.

Mit der Vorrichtung kann ein beidseitiges Abziehen einer Klebeschutzfolie ermöglicht werden und ein prozessüberwachtes Aufbringen des Schutzbandes ist möglich. Gegenüber einem manuellen Umwickelprozess ist die Steigung der Wicklung gleichmäßig und reproduzierbar. Eine automatische Überwachung des Umwickelns ist möglich, insbesondere durch ein eingewebtes Farbband im Schutzband oder eine andere Markierung des Schutzbandes. Die Vorratslänge des Schutzbands ist nicht begrenzt, da die Vorratsrolle des Schutzbandes stationär an der Schutzbandführung angeordnet werden kann. Somit ist der Durchmesser der Schutzbandrolle nicht begrenzt. Es kann des Weiteren weniger Verschnitt und/oder weniger Verschwendung von Schutzband erreicht werden. Dies kann insbesondere durch die Möglichkeit einer großen Vorratsrolle erreicht werden, mit der mehrere Leitungssätze umwickelt werden können, sodass die Länge des Schutzbandes für mehrere Leitungssätze ausreicht. Hierdurch muss die Vorratsrolle weniger oft gewechselt werden, was eine geringere Rüstzeit zur Folge hat. Auch können Mehrfachleitungen geschützt werden, insbesondere 2-phasige bzw. 3-phasige Mehrfachleitungen, da nicht mehr Schutzschläuche auf jede Leitung einzeln aufgebracht werden müssen. Zusätzlich kann ein Schutz bis zu einem Stecker gewährleitet werden. Das Umwickeln erfolgt nach der Konfektionierung des Leitungssatzes und kann deshalb bis nah an den Stecker geführt werden. Die Vorrichtung erlaubt das Umwickeln von Leitungssätzen kompatibel zu anderen unterschiedlichen Anforderungen verschiedener Kunden, bei denen beispielsweise ein Schutzschlauch aufzuschieben ist.

In einer Ausführungsform umfasst die Schutzbandführung eine Abwickelrolle, die eingerichtet ist, das Schutzband zu bevorraten.

Das Schutzband weist Klebestreifen auf. Auf den Klebeflächen des Schutzbandes liegen Klebeschutzstreifen auf, die beim Anbringen, d.h. vor dem Umwickeln, abgezogen werden müssen. Bei der beschriebenen Vorrichtung mit einer stationären Abwickelrolle kann die Abzugsvorrichtung einfach integriert werden.

Das Abrollen des Schutzbandes kann passiv erfolgen. Ebenso kann eine Bremsvorrichtung vorgesehen sein, die eine Abwickeldrehung bremst, um das Schutzband auf Spannung zu halten. Es kann auch ein aktives Abwickeln vorgesehen sein, um eine Spannung auf den Leitungssatz zu reduzieren, falls die Schutzbandrolle einen hohen Widerstand bietet.

Durch die Vorrichtung kann ein Umwickeln des Leitungssatzes ohne Lücken gewährleistet werden. Hierbei können beidseitig angebrachte Klebestreifen des Schutzbandes direkt übereinander liegen.

Erfindungsgemäß umfasst die Schutzbandführung eine Aufwickelrolle, die eingerichtet ist, während des Aufwickelns des Schutzbandes auf den Leitungssatz einen Klebeschutzstreifen von dem Schutzband aufzuwickeln.

Das Schutzband ist mit einem oder mehreren Klebeschutzstreifen versehen, die eingerichtet sind, eine Klebefläche auf einer Oberfläche des Schutzbandes zu bedecken, insbesondere um ein Kleben des Schutzbandes in aufgerolltem Zustand zu verhindern. Zum Umwickeln des Leitungssatzes werden der Klebeschutzstreifen oder die Klebeschutzstreifen abgezogen. Mit der beschriebenen Vorrichtung kann ein beidseitiges Abziehen erfolgen, insbesondere ein gleichzeitiges Abziehen und Aufrollen des oder der Klebeschutzstreifen während des Wickelprozesses.

Die Abwickelrolle, ggf. zusammen mit der oder den Aufwickelrollen, stellt eine Schutzbandabrollvorrichtung dar, die zum Abziehen des Schutzbandes und Aufrollen der Klebeschutzstreifen dient. Die Rollen können aktiv über Motoren mit Drehmomentbegrenzung angetrieben werden oder passiv über die Drehung der Spenderolle, d.h. dem Schutzbandvorrat auf der Abwickelrolle, und entsprechender Untersetzung. Hierbei kann eine Rutschkupplung zum Einsatz kommen, um die Sicherheit der Vorrichtung zu erhöhen. Um die Prozesssicherheit zu erhöhen kann der Abzug des Schutzstreifens mittels eines Sensors überwacht werden.

In einer Ausführungsform umfasst die Schutzbandführung eine Umlenkrolle, die in Aufwickelrichtung des Klebeschutzstreifens vor der Aufwickelrolle angeordnet ist und über die der Klebeschutzstreifen führbar ist und wobei die Umlenkrolle über ein Federelement gespannt ist. Hierdurch kann ein sauberes Abziehen der Klebeschutzstreifen erfolgen.

In einer Ausführungsform ist die Schutzbandführung schwenkbar und eingerichtet, durch Schwenken einen Wickelwinkel gegenüber dem Leitungssatz für das Aufwickeln des Schutzbandes einzustellen.

Die Wickelung des Schutzbandes kann so erfolgen, dass die Klebestreifen von beiden Seiten des Schutzbandes nach dem Umwickeln des Leitungssatzes exakt aufeinander liegen. Hierzu ist es vorteilhaft, einen Wickelwinkel, in dem das Schutzband um den Leitungssatz gewickelt wird, variieren zu können, um den Wickelwinkel an unterschiedliche Durchmesser von Leitungssätzen, unterschiedliche Breiten oder Dicken des Schutzbandes anzupassen. Durch Schwenken der Schutzbandführung kann der Wickelwinkel einstellbar sein und somit kann eine Überlappung des Schutzbandes mit einer vorher aufgewickelten Lage des Schutzbandes eingestellt werden, insbesondere für ein prozesssicheres Aufbringen. Anhand von Parametern des Leitungssatzes, einer Bandbreite des Schutzbandes und einer gewünschten Überlappung kann der Wickelwinkel berechnet und an der Vorrichtung eingestellt werden. Die Parameter können einen Bündelumfang des Leitungssatzes, eine Bandbreite des Schutzbandes und eine geforderte Überlappung der Schutzbandschichten auf dem Leitungssatz umfassen. Die Berechnung kann in einer Maschinensteuerung erfolgen, die die Vorrichtung ansteuert.

In einer Ausführungsform verläuft das Schwenken um eine Achse, die eine Achse der linearen Verschiebung schneidet. Hierdurch kann das Schwenken so erfolgen, dass der Bereich des Umwickelns in der Schwenkachse liegt, was Verformungen durch unsauberes Aufbringen des Schutzbandes entgegenwirkt.

In einer Ausführungsform umfasst die Schutzbandführung eine Bandauflage, die eingerichtet ist, das Schutzband zu unterstützen. Hierdurch kann das Schutzband präzise an den Leitungssatz herangeführt werden.

In einer Ausführungsform umfasst die Bandauflage eine Aussparung, die so angeordnet ist, dass ein Klebestreifen des Schutzbandes fluchtend zu der Aussparung verläuft, wenn das Schutzband von der Schutzbandführung geführt wird und auf der Bandauflage aufliegt. Hierdurch wird einem Anhaften des Schutzbandes an der Bandauflage entgegengewirkt.

In einer Ausführungsform umfasst der Antrieb einen Drehantrieb und einen Linearantrieb, wobei der Drehantrieb mit dem Linearantrieb mechanisch gekoppelt ist.

Der Linearantrieb kann den Leitungssatz mit definiertem Vorschub in Längsrichtung, d.h. längs zu einer Haupterstreckungsrichtung des Leitungssatzes, verschieben und durch gleichzeitiges Drehen des Leitungssatzes durch den Drehantrieb den Leitungssatz mit Schutzband überziehen. Der notwendige Vorschub des Linearantriebs kann durch eine Maschinensteuerung automatisch berechnet werden, insbesondere basierend auf Parametern, wie Schutzbandbreite, Schutzbanddicke, Leitungssatzdicke. Der Linearantrieb und der Drehantrieb können gekoppelt sein, insbesondere mechanisch, um die Drehgeschwindigkeit des Drehantriebs an die Geschwindigkeit des Linearantriebs anzupassen, oder umgekehrt. Die Kopplung kann auch elektronisch erfolgen, beispielsweise durch eine Software einer Ansteuerung. Durch die Kopplung kann sich ein synchronisierter Antrieb ergeben.

In einer Ausführungsform umfasst die Vorrichtung eine Leitungssatzführung, die im Bereich einer Umwickelstelle des Schutzbandes angeordnet und eingerichtet ist, den Leitungssatz zu führen.

Die Leitungssatzführung, insbesondere im Wickelbereich, kann querschnittsabhängig bezogen auf den Leitungssatz ausgeführt sein und durch den synchronisierten Antrieb das verdrehen bzw. beschädigen des Leitungssatzes verhindern. Mit den Leitungssatzführungen können auch dünne Leitungssätze oder Leitungen umwickelt werden, denen eine hohe Steifigkeit fehlt.

In einer Ausführungsform umfasst die Vorrichtung eine Schneideinheit, die eingerichtet ist, das Schutzband abzuschneiden.

Mit der Schneideinheit kann das Schutzband abgeschnitten und/oder festgedrückt werden. Schutzbänder, insbesondere offene Crashschutzprodukte für Hochvoltleitungen, können somit automatisiert aufgebracht und geschnitten werden.

In einer Ausführungsform ist die Schneideinheit zweischneidig.

Je nach Typ des Schutzbandes können zwei gegeneinander bewegliche Klingen eingesetzt werden oder eine eintauchende Klinge. Die Klingen können glatt oder gezackt ausgeführt sein.

Die Aufgabe wird gemäß einem zweiten Aspekt durch ein Verfahren zum Umwickeln eines elektrischen Leitungssatzes mit einem Schutzband gelöst, umfassend:
Einlegen des elektrischen Leitungssatzes in eine Aufnahme, die eingerichtet ist, den elektrischen Leitungssatz zu halten;
Einlegen des Schutzbandes in eine Schutzbandführung, die eingerichtet ist, das Schutzband beim Umwickeln des elektrischen Leitungssatzes zu führen;
Anbringen eines Endes des Schutzbandes an einer Stelle des elektrischen Leitungssatzes; und
Lineares Verfahren und Drehen der Aufnahme mit dem eingelegten elektrischen Leitungssatz durch einen Antrieb, um den Leitungssatz mit dem Schutzband zu umwickeln.

Das Schutzband kann manuell oder automatisch in die Schutzbandführung eingelegt werden, insbesondere mit einem Greifer.

Im Schritt des linearen Verfahrens und Drehens der Aufnahme kann ein Drehantrieb und ein Linearantrieb gekoppelt angetrieben werden, um den Leitungssatz mit der gewünschten Steigung zu umwickeln. Hierbei kann während des Wickelvorgangs eine Leitungssatzführung zugestellt werden um den Leitungssatz zu stabilisieren.

In einer Ausführungsform umfasst das Verfahren ein Einstellen eines Wickelwinkels durch Schwenken der Schutzbandführung.

Das Einstellen des Wickelwinkels kann manuell oder automatisch erfolgen. Bei einer automatischen Einstellung kann eine Steuerung die Schutzbandführung basierend auf Parametern, wie einer Dicke des Leitungssatzes mit einem Motor entsprechend verschwenken. Die Parameter können einen Bündelumfang des Leitungssatzes, eine Bandbreite des Schutzbandes und eine geforderte Überlappung der Schutzbandschichten auf dem Leitungssatz umfassen. Die Berechnung kann in einer Maschinensteuerung erfolgen, die die Vorrichtung ansteuert.

In einer Ausführungsform umfasst das Verfahren ein Abschneiden des Schutzbandes nachdem der elektrische Leitungssatz umwickelt wurde.

Am Ende der Wickelstrecke kann das Schutzband geschnitten werden. Anschließend kann das Schutzbandende manuell oder automatisch angedrückt werden. Das automatische Andrücken kann hierbei maschinell erfolgen.

In einem weiteren Schritt kann, insbesondere abschließend, ein Fixierbündchen an einem Anfang und/oder einem Ende der Wickelstrecke angebracht werden, und insbesondere mit Klebeband fixiert werden.

Im Folgenden wird die Erfindung anhand von Ausführungsbeispielen und den Figuren näher beschrieben. In den Figuren zeigen:
- Fig. 1: eine schematische Darstellung einer Vorrichtung gemäß einem Ausführungsbeispiel;
- Fig. 2: eine schematische Schnittdarstellung der Vorrichtung gemäß dem Ausführungsbeispiel aus Fig. 1; und
- Fig. 3: ein Flussdiagramm für ein Verfahren gemäß einem Ausführungsbeispiel.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln.

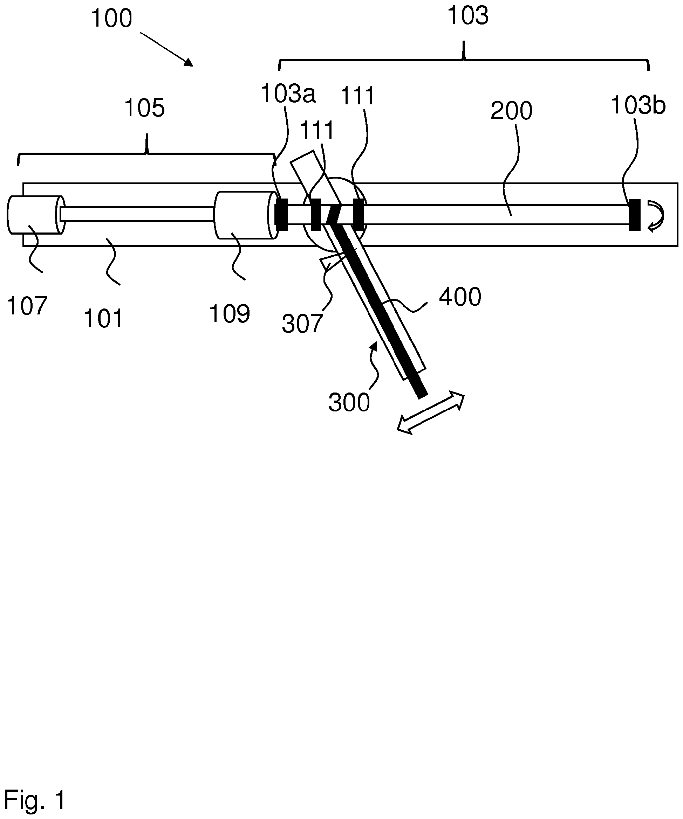

Fig.1 zeigt eine schematische Darstellung einer Vorrichtung 100. Die Vorrichtung 100 weist ein Maschinenbett 101 auf, das eingerichtet ist, die weiteren Teile der Vorrichtung 100 aufzunehmen. Das Maschinenbett 101 stellt eine steife Unterkonstruktion zur Aufnahme von Aggregaten und Komponenten der Vorrichtung 100 dar und bietet eine Führung zur Linearbewegung eines Leitungssatzes 200. In einem weiteren Ausführungsbeispiel entfällt das Maschinenbett 101.

Die Vorrichtung 100 weist eine Aufnahme 103 auf. Die Aufnahme 103 ist eingerichtet den Leitungssatz 200 aufzunehmen und zu halten. Der Leitungssatz 200 kann eine elektrische Leitung umfassen, insbesondere mehrere elektrische Leitungen. Der Leitungssatz 200 ist vorgesehen, als Kabelbaum in einem Fahrzeug eingebaut zu werden. In weiteren Ausführungsbeispielen dient der Leitungssatz 200 anderen Zwecken.

Die Aufnahme 103 umfasst eine Profilwelle, die drehbar gelagert ist. Insbesondere umfasst die Aufnahme 103 einen ersten Halter 103a und einen zweiten Halter 103b, in die jeweils ein Ende des Leitungssatzes 200 einlegbar und befestigbar ist. Die beiden Halter 103a, 103b umfassen jeweils zwei Halbschalen, die miteinander verbindbar sind und zwischen denen je ein Leitungssatzende festlegbar ist. In die Aufnahme 103 kann der Leitungssatz 200 hinten und vorne, d.h. an den Enden des Leitungssatzes 200, geklemmt werden, um die Drehbewegung in den Leitungssatz 200 zu übertragen. In einem weiteren Ausführungsbeispiel umfasst die Aufnahme 103 eine Buchse oder einen Stecker, in die ein Gegenstück des Leitungssatzes 200 steckbar ist. So kann ein Fixieren des Leitungssatzes 200 in der Aufnahme 103 erleichtert werden. Hierbei kann die Aufnahme 103 Adapter umfassen, in die bestimmte Stecker oder Buchsen des Leitungssatzes 200 eingesetzt werden können.

Die Vorrichtung 100 weist einen Antrieb 105 auf. Der Antrieb 105 ist eingerichtet, den Leitungssatz 200 linear zu verschieben und gleichzeitig zu drehen. Die Drehung erfolgt hierbei im Wesentlichen um die Längsachse des Leitungssatzes 200. Die lineare Verschiebung erfolgt im Wesentlichen parallel zu der Längsachse des Leitungssatzes 200.

Der Antrieb 105 weist einen Linearantrieb 107 und einen Drehantrieb 109 auf. Der Drehantrieb 109 ist ein drehzahlgeregelter Elektromotor und der Linearantrieb 107 ist ein regelbarer Antrieb in Riemen- oder Spindelausführung. In einem weiteren Ausführungsbeispiel kann es sich um andere Antriebe handeln.

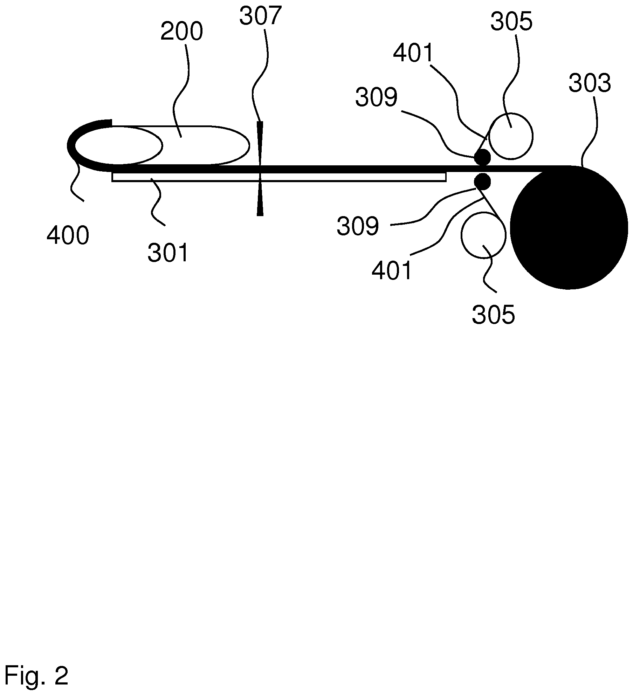

Der Linearantrieb 107 und der Drehantrieb 109 werden jeweils von einer Steuerung, in den Fig.1 und 2 nicht dargestellt, angesteuert. Die Steuerung bewirkt hierbei eine Kopplung des Linearantriebs 107 mit dem Drehantrieb 109, um die lineare Verschiebung und die Drehung aufeinander abzustimmen. In einem weiteren Ausführungsbeispiel erfolgt die Kopplung des Linearantriebs 107 mit dem Drehantrieb 109 mechanisch. In einem weiteren Ausführungsbeispiel umfasst der Antrieb 105 lediglich einen Motor, der eingerichtet ist, über eine entsprechende Umsetzung die lineare Verschiebung und die Drehung zu bewirken.

Im beschriebenen Ausführungsbeispiel verschiebt der Linearantrieb 107 den Drehantrieb 109 zusammen mit der Aufnahme 103. Durch das Zusammenspiel der linearen Verschiebung und der Drehung wird der Leitungssatz 200 schraubenartig verfahren.

Die Vorrichtung 100 weist eine Leitungssatzführung 111 auf. Die Leitungssatzführung 111 ist im Bereich des Umwickelns angeordnet und dient dazu den Leitungssatz 200 zu führen, insbesondere zu stabilisieren und seitliche Kräfte, die beim Umwickeln des Leitungssatzes 200 entstehen aufzunehmen. Die Leitungssatzführung 111 umfasst zwei Hülsen, die beiderseitig des Bereichs der Umwicklung angebracht sind und durch die der Leitungssatz 200 läuft, wenn der Leitungssatz 200 in die Vorrichtung 100 eingelegt ist. In einem weiteren Ausführungsbeispiel ist die Leitungssatzführung 111 anders konstruiert, beispielsweise durch gebogene Aufleger.

Die Vorrichtung 100 weist eine Schutzbandführung 300 auf. Fig. 2 zeigt eine schematische Darstellung eines Schnitts der Vorrichtung 100 mit der Schutzbandführung 300. Die Schutzbandführung 300 weist eine Bandauflage 301 auf, die als Auflage ausgebildet ist. Über die Bandauflage 301 kann ein Schutzband 400 gleiten. Die Bandauflage 301 reicht an den Leitungssatz 200 heran, wenn dieser in die Vorrichtung 100 eingelegt ist, d.h. der Leitungssatz 200 wird nahe an der Bandauflage 301 vorbeigeführt. Hierdurch kann das Schutzband 400 von der Bandauflage 301 auf den Leitungssatz 200 aufgewickelt werden. Die Schutzbandführung 300 ist eine einstellbare Zuführeinrichtung des Schutzbandes, d.h. des Wickelbandes.

Die Schutzbandführung 300 weist eine Abwickelrolle 303 auf, die als Spenderrolle dient. Die Abwickelrolle 303 kann das Schutzband 400 aufgerollt bevorraten. Die Abwickelrolle 303 ist an einem Ende der Bandauflage 301 angeordnet, sodass das Schutzband 400 von der Abwickelrolle 303 auf die Bandauflage 301 gleiten kann. In einem weiteren Ausführungsbeispiel ist die Abwickelrolle 303 zwischen den Enden der Bandauflage 301 angeordnet und der Abstand zu einer Oberfläche der Bandauflage 301 ist so gering, dass das Schutzband 400 beim Abwickeln von der Abwickelrolle 303 längs über die Bandauflage 301 gleiten kann. In einem weiteren Ausführungsbeispiel entfällt die Bandauflage 301 und die Abwickelrolle 303 ist unter Berücksichtigung einer Steifheit des Schutzbandes 400 so nahe an dem Maschinenbett 101 angeordnet, dass das Schutzband 400 gezielt auf den Leitungssatz 200 aufgewickelt werden kann.

Die Abwickelrolle 303 ist passiv gelagert, d.h. sie ist nicht durch einen Motor angetrieben. Eine Spannung des Schutzbandes 400, die zum Umwickeln hilfreich ist, kann hierbei über einen Reibungswiderstand der Abwickelrolle 303 erzielt werden. Hierbei kann eine Rutschkupplung die Vorrichtung 100 vor Beschädigungen schützen. In einem weiteren Ausführungsbeispiel ist die Abwickelrolle 303 aktiv über einen Motor betrieben. Hierbei kann eine Drehmomentbegrenzung die Vorrichtung 100 vor Beschädigungen schützen.

Die Schutzbandführung 300 weist zwei Aufwickelrollen 305 auf. In einem weiteren Ausführungsbeispiel weist die Schutzbandführung 300 nur eine Aufwickelrolle 305 auf.

Die Aufwickelrollen 305 dienen jeweils dem Aufwickeln eines Klebeschutzstreifens 401 des Schutzbandes 400. Der Klebeschutzstreifen 401 dient dem Bedecken einer Klebefläche des Schutzbandes 400, damit dieses nicht ungewollt verklebt.

Die Aufwickelrollen 305 werden durch eine Untersetzung mit mechanischer Umlenkung der Rotation der Abwickelrolle 303 angetrieben. In einem weiteren Ausführungsbeispiel werden die Aufwickelrollen 305 über einen Motor angetrieben.

Durch eine Vorspannung einer Umlenkrolle 309 in Laufrichtung des Klebeschutzstreifens 401 vor der Aufwickelrolle 305 wird der Klebeschutzstreifen 401 beim Aufwickeln auf die Aufwickelrolle 305 unter Spannung gehalten.

Das Abwickeln des Schutzbandes 400 und das Aufwickeln der Klebeschutzstreifen 401 wird über einen Sensor, aus Gründen der Übersichtlichkeit nicht dargestellt, überwacht. In einem weiteren Ausführungsbeispiel werden mehrere Sensoren hierfür eingesetzt oder die Überwachung mit Sensor entfällt.

Die Schutzbandführung 300 weist eine Schneideinheit 307 auf. Die Schneideinheit 307 ist fest positioniert, in Bezug auf die Bandauflage 301. In einem weiteren Ausführungsbeispiel ist die Schneideinheit 307 relativ zu dem Maschinenbett 101 fix. Die Schneideinheit 307 weist Klingen auf, die im gegenseitigen Zusammenspiel eingerichtet sind, das Schutzband 400 zu durchtrennen. In einem weiteren Ausführungsbeispiel umfasst die Schneideinheit 307 eine Klinge, die im Zusammenspiel mit einer Auflage, insbesondere der Bandauflage 301 eingerichtet ist, das Schutzband 400 zu schneiden.

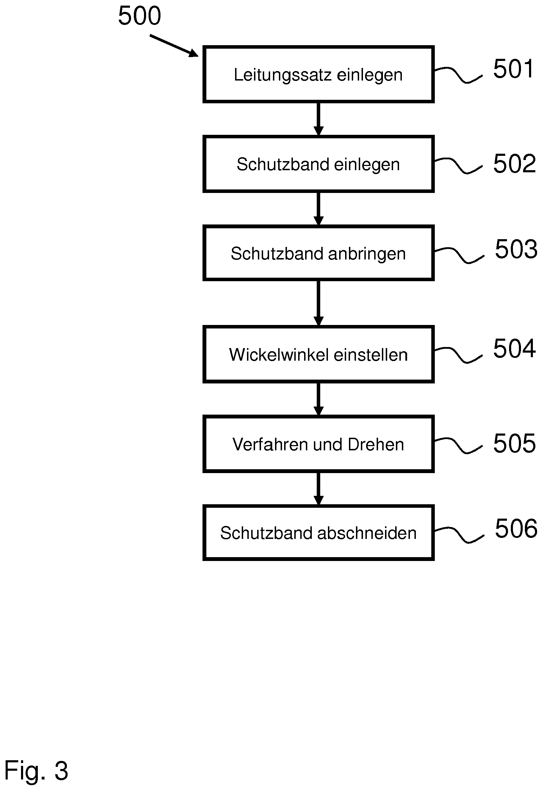

Fig. 3 zeigt ein Flussdiagramm 500 für ein Verfahren gemäß einem Ausführungsbeispiel.

In Schritt 501 wird der Leitungssatz 200 in die Vorrichtung 100 eingelegt. Hierzu werden die Enden des Leitungssatzes 200 an dem ersten Halter 103a und dem zweiten Halter 103b befestigt. Des Weiteren wird der Leitungssatz 200 in die Leitungssatzführung 111 eingelegt.

In Schritt 502 wird das Schutzband 400 in die Vorrichtung 100 eingelegt, indem das Schutzband 400 an der Abwickelrolle 303 befestigt wird, insbesondere durch Aufstecken. Der Schritt 502 kann vor oder nach dem Schritt 501 erfolgen.

In einem Schritt 503 wird ein freies Ende des Schutzbandes 400 an dem Leitungssatz 200 angebracht. Hierzu kann manuell oder automatisch mittels eines Greifers das Ende des Schutzbandes 400 an den Leitungssatz 200 angeklebt werden. Hierbei wird ein Klebeschutzstreifen 401 des Schutzbandes 400 abgezogen und auf die Aufwickelrolle 305 aufgezogen. Im beschriebenen Ausführungsbeispiel weist das Schutzband 400 zwei Klebestreifen auf gegenüberliegenden Oberflächen des Schutzbandes 400 auf. Beide Klebestreifen sind jeweils durch Klebeschutzstreifen 401 geschützt, die beide jeweils auf eine Aufwickelrolle 305 aufgewickelt werden. Durch eine Vorspannung einer Umlenkrolle 309 vor der Aufwickelrolle wird der Klebeschutzstreifen 401 beim Aufwickeln auf die Aufwickelrolle 305 unter Spannung gehalten.

In einem Schritt 504 wird der Wickelwinkel des Schutzbandes 400 eingestellt. Hierzu wird die Schutzbandführung 300 um eine Achse, die die Längsachse des Leitungssatzes 200 schneidet, wenn der Leitungssatz in die Vorrichtung 100 eingelegt ist, gedreht. So kann der Winkel gesteuert werden, in dem das Schutzband 400 von der Schutzbandführung 300 auf den Leitungssatz 200 auftrifft, währen der Leitungssatz 200 gedreht und/oder verschoben wird. Über eine Winkelsteuerung kann der Wickelwinkel auch während des Betriebs angepasst werden, insbesondere, um das Umwickeln des Leitungssatzes 200 mit dem Schutzband 400 an unterschiedliche Durchmesser des Leitungssatzes 200 anzupassen. Hierfür können Sensoren verwendet werden, die den Durchmesser des Leitungssatzes 200 erfassen. In einem weiteren Ausführungsbeispiel entfällt die Wickelsteuerung und das adaptive Anpassen des Wickelwinkels.

In einem Schritt 505 wird der Antrieb 105 gestartet. Hierzu wird über eine Steuerung der Linearantrieb 107 und der Drehantrieb 109 angesteuert. Der Drehantrieb 109 rotiert den Leitungssatz 200 um die Längsachse des Leitungssatzes 200 und der Linearantrieb 107 verschiebt den Leitungssatz 200 zusammen mit dem Drehantrieb 109 linear. Der Leitungssatz 200 wird hierbei verfahren und gedreht.

Hierbei wird das Schutzband 400 von der Abwickelrolle 303 abgezogen und auf den Leitungssatz 200 aufgewickelt, d.h. der Leitungssatz 200 wird von dem Schutzband 400 umwickelt. Da der Wickelwinkel eingestellt werden kann, wird das Schutzband genau so um den Leitungssatz 200 gewickelt, dass die Klebebereiche des Schutzbandes 400 jeweils aufeinander zu liegen kommen.

In einem Schritt 506 wird das Schutzband 400 von der Schneideinheit 307 abgeschnitten, wenn die gewünschte Umwickelweite erreicht ist. Anschließend wird manuell oder automatisch ein Abschlussstreifen um das Ende des Schutzbandes 400 auf dem Leitungssatz 200 gewickelt oder ein Schrumpfschlauch aufgesteckt und befestigt. In einem weiteren Ausführungsbeispiel kann dies entfallen.

### Bezugszeichenliste

- 100: Vorrichtung
- 101: Maschinenbett
- 103: Aufnahme
- 103a, 103b: Halter
- 105: Antrieb
- 107: Linearantrieb
- 109: Drehantrieb
- 111: Leitungssatzführung
- 200: Leitungssatz
- 300: Schutzbandführung
- 301: Bandauflage
- 303: Abwickelrolle
- 305: Aufwickelrolle
- 307: Schneideinheit
- 309: Umlenkrolle
- 400: Schutzband
- 401: Klebeschutzstreifen
- 500: Flussdiagramm
- 501 - 506: Verfahrensschritt

## Patentansprüche

1. Vorrichtung (100) zum Umwickeln eines elektrischen Leitungssatzes (200) mit einem Schutzband (400), wobei das Schutzband ein Klebeband ist, umfassend eine Aufnahme (103), die eingerichtet ist, den elektrischen Leitungssatz (200) zu halten;
eine Schutzbandführung (300), die eingerichtet ist, das Schutzband (400) beim Umwickeln des elektrischen Leitungssatzes (200) zu führen, und
einen Antrieb (105), der eingerichtet ist, die Aufnahme (103) mit dem elektrischen Leitungssatz (200) linear zu verfahren und zu drehen, um den Leitungssatz (200) mit dem Schutzband (400) zu umwickeln,
**dadurch gekennzeichnet, dass** die Schutzbandführung (300) eine Aufwickelrolle (305) umfasst, die eingerichtet ist, während des Aufwickelns des Schutzbandes (400) auf den Leitungssatz (200) einen Klebeschutzstreifen (401) von dem Schutzband (400) aufzuwickeln.

2. Vorrichtung (100) nach Anspruch 1, wobei die Schutzbandführung (300) eine Abwickelrolle (303) umfasst, die eingerichtet ist, das Schutzband (400) zu bevorraten.

3. Vorrichtung (100) nach Anspruch 1, wobei die Schutzbandführung (300) eine Umlenkrolle (309) umfasst, die in Aufwickelrichtung des Klebeschutzstreifens (401) vor der Aufwickelrolle (305) angeordnet ist und über die der Klebeschutzstreifen (401) führbar ist und wobei die Umlenkrolle (309) über ein Federelement gespannt ist.

4. Vorrichtung (100) nach einem der vorstehenden Ansprüche, wobei die Schutzbandführung (300) schwenkbar und eingerichtet ist, durch Schwenken einen Wickelwinkel gegenüber dem Leitungssatz (200) für das Aufwickeln des Schutzbandes (400) einzustellen.

5. Vorrichtung (100) nach Anspruch 4, wobei das Schwenken um eine Achse verläuft, die eine Achse der linearen Verschiebung schneidet.

6. Vorrichtung (100) nach einem der vorstehenden Ansprüche, wobei die Schutzbandführung (300) eine Bandauflage (301) umfasst, die eingerichtet ist, das Schutzband (400) zu unterstützen.

7. Vorrichtung (100) nach Anspruch 6, wobei die Bandauflage (301) eine Aussparung umfasst, die so angeordnet ist, dass ein Klebestreifen des Schutzbandes (400) fluchtend zu der Aussparung verläuft, wenn das Schutzband (400) von der Schutzbandführung (300) geführt wird und auf der Bandauflage (301) aufliegt.

8. Vorrichtung (100) nach einem der vorstehenden Ansprüche, wobei der Antrieb (105) einen Drehantrieb (109) und einen Linearantrieb (107) umfasst, wobei der Drehantrieb (109) mit dem Linearantrieb (107) mechanisch gekoppelt ist.

9. Vorrichtung (100) nach einem der vorstehenden Ansprüche, umfassend eine Leitungssatzführung (111), die im Bereich einer Umwickelstelle des Schutzbandes (400) angeordnet und eingerichtet ist, den Leitungssatz (200) zu führen.

10. Vorrichtung (100) nach einem der vorstehenden Ansprüche, umfassend eine Schneideinheit (307), die eingerichtet ist, das Schutzband (400) abzuschneiden.

11. Vorrichtung (100) nach Anspruch 10, wobei die Schneideinheit (307) zweischneidig ist.

12. Verfahren zum Umwickeln eines elektrischen Leitungssatzes (200) mit einem Schutzband (400), wobei das Schutzband ein Klebeband ist, umfassend:
Einlegen (501) des elektrischen Leitungssatzes in eine Aufnahme (103), die eingerichtet ist, den elektrischen Leitungssatz (200) zu halten;
Einlegen (502) des Schutzbandes in eine Schutzbandführung (300), die eingerichtet ist, das Schutzband (400) beim Umwickeln des elektrischen Leitungssatzes (200) zu führen, wobei die Schutzbandführung (300) eine Aufwickelrolle (305) umfasst, die eingerichtet ist, während des Aufwickelns des Schutzbandes (400) auf den Leitungssatz (200) einen Klebeschutzstreifen (401) von dem Schutzband (400) aufzuwickeln;
Anbringen (503) eines Endes des Schutzbandes (400) an einer Stelle des elektrischen Leitungssatzes (200); und
Lineares Verfahren und Drehen (505) der Aufnahme (103) mit dem eingelegten elektrischen Leitungssatz (200) durch einen Antrieb (105), um den Leitungssatz (200) mit dem Schutzband (400) zu umwickeln.

13. Verfahren nach Anspruch 12, umfassend ein Einstellen eines Wickelwinkels (504) durch Schwenken der Schutzbandführung (300).

14. Verfahren nach einem der Ansprüche 12 oder 13, umfassend ein Abschneiden (506) des Schutzbandes (400) nachdem der elektrische Leitungssatz (200) umwickelt wurde.

## Claims

1. Device (100) for wrapping a protective tape (400) around an electrical wire harness (200), wherein the protective tape is an adhesive tape, comprising
a receptacle (103) adapted to hold the electrical wire harness (200);
a protective tape duct (300) adapted to guide the protective tape (400) as it wraps around the electrical wire harness (200); and
a drive (105) adapted to linearly move and rotate the receptacle (103) with the electrical wire harness (200) to wrap the wire harness (200) with the protective tape (400) **characterized in that** the protective tape duct (300) comprises a winding roller (305) adapted to take up an adhesive protective strip (401) from the protective tape (400) during winding of the protective tape (400) onto the wiring harness (200).

2. The device (100) according to claim 1, wherein the protective tape duct (300) comprises an unwind reel (303) configured to stock the protective tape (400).

3. Device (100) according to claim 1, wherein the protective tape duct (300) comprises a pulley (309), which is arranged in front of the winding roller (305) in the take-up direction of the adhesive protective strip (401) and over which the adhesive protective strip (401) can be guided, and wherein the pulley (309) is tensioned via a spring element.

4. Device (100) according to any one of the preceding claims, wherein the protective tape duct (300) is pivotable and arranged to adjust, by pivoting, a winding angle relative to the wire harness (200) for winding the protective tape (400).

5. Device (100) according to claim 4, wherein the pivoting runs along an axis intersecting an axis of linear displacement.

6. Device (100) according to any one of the preceding claims, wherein the protective tape duct (300) comprises a tape support (301) adapted to support the protective tape (400).

7. Device (100) according to claim 6, wherein the tape support (301) comprises a recess arranged in a way that an adhesive strip of the protective tape (400) is aligned with the recess when the protective tape (400) is guided by the protective tape duct (300) and rests on the tape support (301).

8. Device (100) according to any one of the preceding claims, wherein the drive (105) comprises a rotary drive (109) and a linear drive (107), wherein the rotary drive (109) is mechanically coupled to the linear drive (107).

9. Device (100) according to any one of the preceding claims, comprising a wire harness guide (111) arranged in the area of a wrapping point of the protective tape (400) and adapted to guide the wire harness (200).

10. Device (100) according to any one of the preceding claims, comprising a cutting unit (307) adapted to cut the protective tape (400).

11. Device (100) according to claim 10, wherein the cutting unit (307) is double-edged.

12. Method of wrapping a protective tape (400) around an electrical wire harness (200), wherein the protective tape is an adhesive tape, comprising:
Inserting (501) the electrical wire harness into a receptacle (103) adapted to hold the electrical wire harness (200);
Inserting (502) the protective tape into a protective tape duct (300) adapted to guide the protective tape (400) while wrapping the electrical wire harness (200), wherein the protective tape duct (300) comprises a winding roller (305) adapted to take up an adhesive protective strip (401) from the protective tape (400) while winding the protective tape (400) onto the electrical wire harness (200);
Attaching (503) an end of the protective tape (400) to a position on the electrical wire harness (200); and
Linearly moving and rotating (505) the receptacle (103) with the electrical wire harness (200) inserted by a drive (105) to wrap the wire harness (200) with the protective tape (400).

13. Method according to claim 12, comprising adjusting a wrapping angle (504) by pivoting the protective tape duct (300).

14. Method according to one of claims 12 or 13, comprising cutting (506) the protective tape (400) after the electrical wire harness (200) has been wrapped.

## Revendications

1. Dispositif (100) pour envelopper un faisceau de câbles électriques (200) avec une bande de protection (400), la bande de protection étant une bande adhésive, comprenant
un logement (103) qui est conçu pour maintenir le faisceau de câbles électriques (200) ;
un guide de bande de protection (300), qui est conçu pour guider la bande de protection (400) lors de l'enroulement du faisceau de câbles électriques (200), et
un entraînement (105) qui est conçu, de déplacer linéairement et de faire tourner le logement (103) avec le faisceau de câbles électriques (200), pour d'enrouler le faisceau de câbles électriques (200) avec la bande de protection (400).
**caractérisé en ce que** le guide de bande de protection (300) comprend un rouleau d'enroulement (305) qui est agencé pour enrouler une bande de protection adhésive (401) à partir de la bande de protection (400) pendant l'enroulement de la bande de protection (400) sur le faisceau de câbles électriques (200).

2. Dispositif (100) selon la revendication 1, dans lequel le guide de bande de protection (300) comprend un rouleau de déroulement (303) agencé pour stocker la bande de protection (400).

3. Dispositif (100) selon la revendication 1, dans lequel le guide de bande de protection (300) comprend un rouleau de renvoi (309) qui est disposé avant le rouleau d'enroulement (305) dans le sens d'enroulement de la bande de protection adhésive (401) et sur lequel la bande de protection adhésive (401) peut être guidée, et dans lequel le rouleau de renvoi (309) est tendu par un élément de ressort.

4. Dispositif (100) selon l'une des revendications précédentes, dans lequel le guide de bande de protection (300) est pivotant et agencé pour régler par pivotement un angle d'enroulement par rapport au faisceau de câbles électriques (200) pour l'enroulement de la bande de protection (400).

5. Dispositif (100) selon la revendication 4, dans lequel le pivotement s'effectue autour d'un axe qui coupe un axe de déplacement linéaire.

6. Dispositif (100) selon l'une quelconque des revendications précédentes, dans lequel le guide de bande de protection (300) comprend un support de bande (301) agencé pour supporter la bande de protection (400).

7. Dispositif (100) selon la revendication 6, dans lequel le support de bande (301) comprend un évidement agencé de sorte qu'une bande adhésive de la bande de protection (400) est alignée avec l'évidement lorsque la bande de protection (400) est guidée par le guide de bande de protection (300) et repose sur le support de bande (301).

8. Dispositif (100) selon l'une quelconque des revendications précédentes, dans lequel l'entraînement (105) comprend un entraînement rotatif (109) et un entraînement linéaire (107), l'entraînement rotatif (109) étant couplé mécaniquement à l'entraînement linéaire (107).

9. Dispositif (100) selon l'une des revendications précédentes, comprenant un guide de faisceau de câbles (111) qui est disposé dans la zone d'un point d'enroulement de la bande de protection (400) et qui est agencé pour guider le faisceau de câbles électriques (200).

10. Dispositif (100) selon l'une quelconque des revendications précédentes, comprenant une unité de coupe (307) adaptée pour couper la bande de protection (400).

11. Dispositif (100) selon la revendication 10, dans lequel l'unité de coupe (307) est à double tranchant.

12. Procédé d'enveloppement d'un faisceau de câbles électriques (200) avec une bande de protection (400), la bande de protection étant un ruban adhésif, comprenant :
Insertion (501) du faisceau de câbles électriques dans un logement (103) adapté pour maintenir le faisceau de câbles électriques (200) ;
Insertion (502) de la bande de protection dans un guide de bande de protection (300) adapté pour guider la bande de protection (400) lors de l'enroulement autour du faisceau de câbles électriques (200), le guide de bande de protection (300) comprenant un rouleau d'enroulement (305) adapté pour enrouler une bande de protection adhésive (401) à partir de la ruban de protection (400) pendant l'enroulement du bande de protection (400) sur le faisceau de câbles électriques (200) ;
l'application (503) d'une extrémité de la bande de protection (400) à un endroit du faisceau de câbles électriques (200) ; et
Déplacement linéaire et rotation (505) du réceptacle (103) avec le faisceau de câbles électriques (200) inséré, au moyen d'un entraînement (105), pour enrouler le faisceau (200) avec la bande de protection (400).

13. Procédé selon la revendication 12, comprenant un réglage d'un angle d'enroulement (504) par pivotement du guide de bande de protection (300).

14. Procédé selon l'une des revendications 12 ou 13, comprenant une coupe (506) de la bande de protection (400) après que le faisceau de câbles électriques (200) a été enveloppé.
